# FASCICULE DE BREVET EUROPEEN

(11) **EP 0 537 078 B1**
(45) Date de publication et mention de la délivrance du brevet: **08.02.1995**
(21) Numéro de dépôt: 92402757.6
(22) Date de dépôt: 08.10.1992
(51) Int. Cl.: B60N 2/00

(54) **Dispositif de verrouillage d'un siège sur un plancher, en particulier pour véhicule automobile, et siège équipé de ce dispositif**
Vorrichtung zur Verriegelung eines Sitzes auf einen Boden, insbesondere für ein Kraftfahrzeug, und Sitz mit dieser Vorrichtung
Device for locking a seat to a floor, in particular for a motor vehicle, and seat with such a device

(30) Priorité: 10.10.1991 FR 9112487
(43) Date de publication de la demande: 14.04.1993
(73) Titulaire: AUTOMOBILES PEUGEOT, 75116 Paris (FR); AUTOMOBILES CITROEN, 92200 Neuilly-sur-Seine (FR)
(72) Inventeur: Normand, Jean, F-78440 Drocourt (FR)
(74) Mandataire: Durand, Yves Armand Louis

(56) Documents cités:
- DE-A- 2 448 139
- FR-A- 2 384 645
- FR-A- 2 555 525
- GB-A- 2 155 780

## Description

La présente invention concerne un dispositif de verrouillage d'un siège sur un plancher, en particulier pour véhicule automobile et un siège équipé de ce dispositif.

Les sièges de véhicule automobile, qu'ils soient du type basculable ou non basculable nécessitent en général d'être fixés de manière amovible au plancher du véhicule.

On connaît par exemple du document US-A-4 700 989 (correspondant au préambule de la revendication indépendante 1) un siège de véhicule basculable vers l'avant constitué principalement d'une assise et d'un dossier montés sur une armature coudée. Cette armature est engagée de manière articulée, par son extrémité inférieure formant pied avant en forme de fourche, avec une tige solidaire du châssis du véhicule, et est reliée au niveau de sa partie coudée également de manière articulée, à un pied arrière dont l'extrémité inférieure libre également conformée en fourche est destinée à être engagée avec une seconde tige solidaire du châssis du véhicule. L'engagement des deux extrémités conformées en fourche précitées sur leur tige respective est maintenu en permanence grâce à un moyen de verrouillage prévu sur chaque pied, et comprenant principalement un élément à fonction de crochet et un ressort coopérant avec la tige de façon à ce que les pieds soient rappelés en permanence en position de verrouillage sur les tiges.

Ce dispositif présente une structure relativement compliquée et en conséquence un coût de fabrication élevé.

On connaît également du document DE-A-1 131 530 un dispositif de verrouillage de la partie inférieure avant d'un siège de véhicule, dans lequel un verrou latéral est formé à l'extrémité d'une tige transversale et coopère avec une encoche circulaire prévue dans une ferrure en forme d'équerre solidaire du plancher du véhicule.

Dans ce document, le verrou est constitué par un ergot de forme parallélépipèdique formé à l'extrémité de la tige et rappelé en permanence dans une position horizontale empêchant sa sortie de l'encoche circulaire précitée par l'intermédiaire d'un ressort, en position de verrouillage du siège, le déverrouillage étant obtenu par l'entraînement en rotation d'un levier relié à la tige comportant l'ergot à l'encontre du ressort, afin de permettre la sortie dudit ergot, alors en position verticale, par une partie supérieure rétrécie de l'encoche.

Dans ce dispositif, le jeu radial nécessaire entre l'ergot et l'encoche engendre un léger débattement vertical du siège sur le plancher, source de bruit et d'usure, et la ferrure est nécessairement en saillie sur le plancher, ce qui nuit à l'usage de celui-ci quand le siège est relevé ou retiré.

La présente invention résout ces inconvénients et propose un dispositif de verrouillage de siège réversible, en particulier pour véhicule automobile, de conception simple et de fonctionnement fiable, permettant une fixation de ce siège dans plusieurs positions longitudinales par rapport au véhicule, et un usage optimal du plancher quand le siège est relevé ou retiré.

A cet effet la présente invention a pour objet un dispositif de verrouillage d'un siège sur un plancher, en particulier pour véhicule automobile, du genre reliant de façon amovible la partie inférieure d'un siège comportant plusieurs pieds au plancher du véhicule, grâce à un moyen de verrouillage associé auxdits pieds et comprenant un élément en saillie coopérant avec une encoche ménagée dans une ferrure solidaire du plancher du véhicule, ledit moyen de verrouillage étant rappelé en permanence, par l'intermédiaire d'un ressort, dans une position de verrouillage du pied dans laquelle l'élément en saillie est prisonnier de l'encoche précitée et étant déverrouillable par l'entraînement en rotation d'un levier de manoeuvre solidaire de l'élément en saillie précité autour d'un axe transversal du véhicule à l'encontre du ressort précité jusqu'à une position de l'élément en saillie par rapport à l'encoche permettant le retrait du siège, ce dispositif étant caractérisé en ce que le moyen de verrouillage précité comprend au moins deux éléments en saillie respectivement solidaires du pied précité et du levier de manoeuvre précité, et destinés à coopérer avec l'encoche de telle façon que les deux éléments en saillie soient maintenus dans une position écartée au fond de ladite encoche par le ressort précité en position de verrouillage empêchant le retrait du pied, et que l'entraînement en rotation du levier précité à l'encontre du ressort provoque une libération de l'élément en saillie associé au levier du fond correspondant de l'encoche, ladite libération entraînant le déverrouillage du siège de façon à autoriser son retrait.

Suivant une réalisation particulière de l'invention, les deux éléments en saillie précités respectivement associés au pied correspondant et au levier, sont constitués chacun par deux ergots s'étendant latéralement de part et d'autre respectivement du pied et du levier précités, lesdits ergots coopérant avec deux encoches en vis-à-vis prévues dans deux parois opposées d'une ferrure solidaire du plancher du véhicule.

Suivant une caractéristique particulière de l'invention, le pied comprend un boîtier destiné à être en partie logé dans un évidement prévu dans la ferrure entre les deux encoches précitées, ledit boîtier comprenant deux flasques parallèles entre lesquels le levier précité est monté articulé.

Suivant une autre caractéristique de l'invention, deux rainures arquées opposées sont ménagées respectivement dans les deux flasques précités et sont destinées à recevoir respectivement les deux ergots s'étendant latéralement de part et d'autre dudit levier, afin d'assurer leur passage lors de la rotation du levier.

On notera que le ressort de rappel du levier en position de verrouillage du siège, est relié par l'une de ses extrémités au levier et par son autre extrémité, au boîtier.

L'invention a également pour objet un siège comportant au moins un pied étant équipé d'un dispositif de verrouillage comportant les caractéristiques décrites ci-dessus prises seules ou en combinaison.

Suivant une réalisation particulière, ce siège comporte deux pieds avant équipés d'un tel dispositif et les deux leviers associés respectivement aux deux dispositifs de verrouillage sont solidaires d'une tige de liaison traversant les deux boîtiers correspondant et formant axe d'articulation de ces deux leviers.

Suivant une autre réalisation de l'invention, le siège précité comporte quatre pieds équipés d'un dispositif de verrouillage comportant les caractéristiques décrites ci-dessus, deux tiges de liaison reliant respectivement les deux leviers des dispositifs de verrouillage situés à l'avant du véhicule et les deux leviers des dispositifs de verrouillage situés à l'arrière du véhicule.

Suivant une caractéristique particulière de l'invention, le siège est solidaire d'une armature reliée de façon articulée aux deux pieds avant et/ou arrière précités.

On notera que chaque ferrure peut comporter plusieurs paires d''encoches en vis-à-vis s'étendant suivant la direction longitudinale du véhicule, d'où il résulte que les sièges peuvent prendre plusieurs positions longitudinales.

On notera également que la partie supérieure de chaque ferrure par laquelle débouchent les encoches affleure le plancher de façon à ne laisser apparaître aucune partie en saillie à la surface dudit plancher lorsque le siège est retiré.

Suivant une autre caractéristique particulière, chaque pied avant est relié au pied arrière du même côté par une biellette.

Mais d'autres avantages et caractéristiques de l'invention apparaîtront mieux dans la description détaillée qui suit et se réfère aux dessins annexés donnés uniquement à titre d'exemple et dans lesquels :
La figure 1 est une vue en perspective d'une armature de siège de véhicule automobile, équipée de dispositifs de verrouillage conformes à une réalisation particulière de l'invention, préalablement à la mise en place du siège sur le plancher pour sa fixation.
La figure 2 est une vue en perspective d'un boîtier formant l'un des pieds d'un siège de véhicule automobile, et d'un levier de manoeuvre du moyen de verrouillage conforme à l'invention.
La figure 3 est une vue en perspective de l'une des ferrures destinées à recevoir l'un des pieds de siège d'un véhicule automobile.
La figure 4 est une vue de côté, partielle et en coupe, d'un siège de véhicule, équipé de dispositifs de verrouillage conformes à l'invention en position de service.
Les figures 5 et 6 sont des vues partielles et en coupe, illustrant l'un des pieds d'un siège de véhicule, équipé du dispositif de l'invention, respectivement en position de service et en position de déverrouillage.
La figure 7 est une vue de côté, partielle et en coupe, illustrant le siège de la figure 4 en position basculée vers l'avant du véhicule.

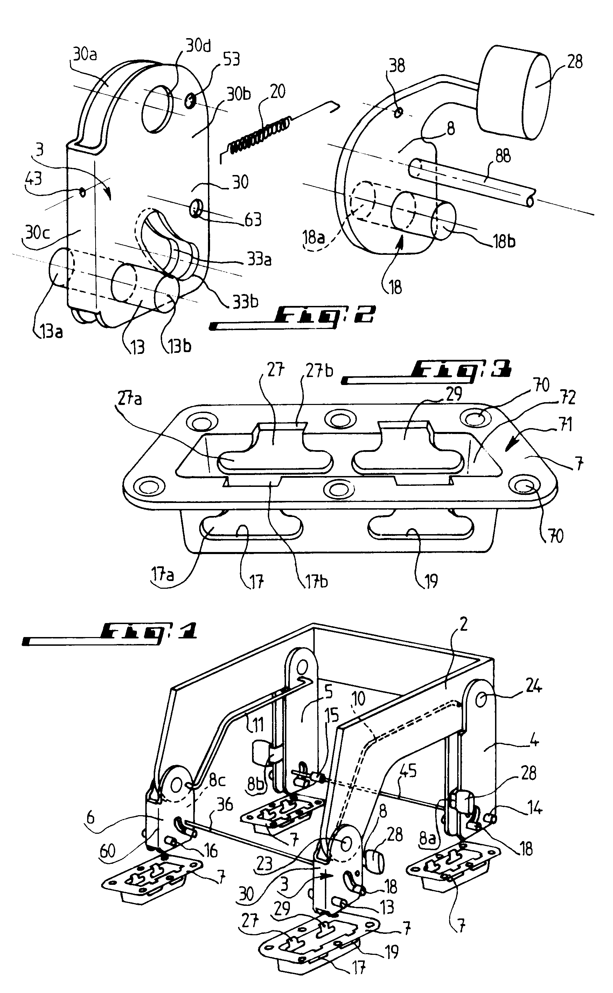

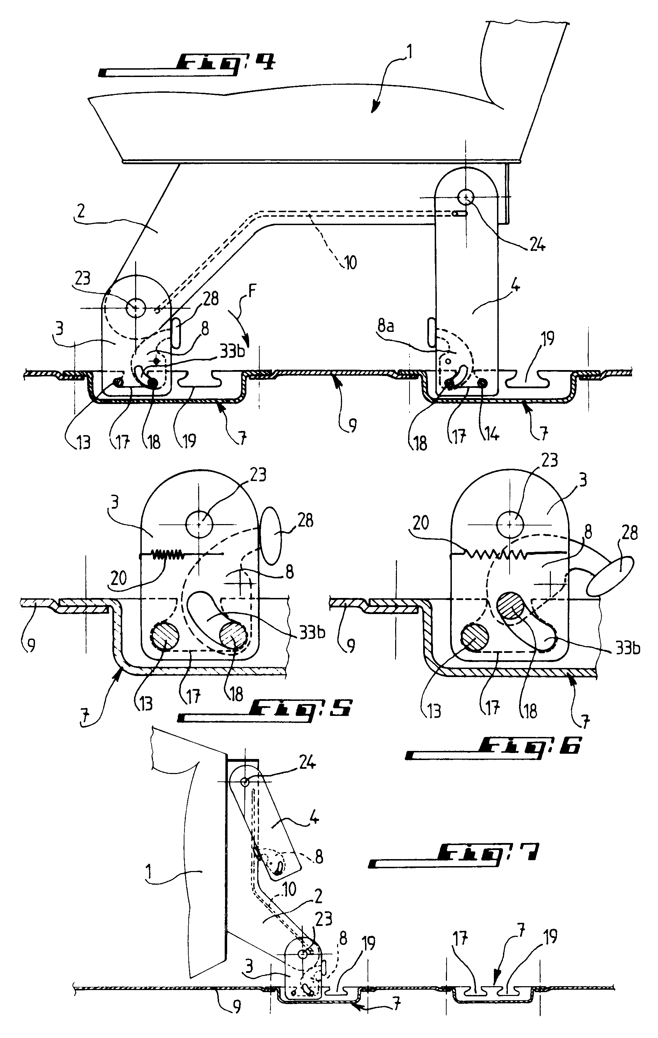

Sur la figure 1, on voit une partie inférieure de siège de véhicule automobile comprenant une armature 2 destinée à recevoir le coussin de siège (non représenté) sur sa partie supérieure, et reliée de façon articulée 23, 24 par sa partie inférieure, à quatre pieds de fixation 3, 4, 5, 6 du siège sur le plancher du véhicule (non représenté). Suivant cette réalisation particulière de l'invention, les quatre pieds 3, 4, 5, 6 sont munis de moyens de verrouillage constitués principalement d'éléments 13, 14, 15, 16 faisant saillie à partir de la surface extérieure des pieds précités 3, 4, 5, 6, et coopérant avec des encoches 17, 27, 19, 29, prévues dans des ferrures 7 destinées à être fixées au plancher du véhicule, lesdits moyens de verrouillage étant actionnables par l'intermédiaire d'un levier de manoeuvre 8 également pourvu d'éléments en saillie 18. La structure de ces moyens de verrouillage va être décrite de façon plus détaillée à travers ce qui va suivre à l'aide des figures 2 et 3.

Sur la figure 2, on voit que l'un 3 des pieds de siège précédemment mentionnés, est formé par un boîtier 30 constitué par deux flasques parallèles 30a, 30b réunis au niveau de l'un de leurs bords latéraux par une paroi latérale 30c. Cette paroi latérale présente une largeur suffisante pour permettre la réception et la rotation entre les deux flasques précités 30a, 30b d'un levier 8, monté pivotant par l'intermédiaire d'une tige 88 solidaire dudit levier 8 dans deux orifices en regard 63, prévus respectivement dans les deux flasques 30a, 30b. Ces deux flasques 30a, 30b sont pourvus d'une part, à leur partie supérieure, respectivement, de deux ouvertures circulaires en regard 30d destinées au montage articulé du pied 3 sur l'armature précitée 2, et d'autre part, de deux ouvertures de forme arquée 33a, 33b, destinées au passage respectivement, de deux ergots 18a, 18b s'étendant latéralement de part et d'autre du levier 8 lors de sa rotation entre les deux flasques 30a, 30b. Les deux flasques 30a, 30b sont également pourvus d'ergots similaires 13a, 13b s'étendant de part et d'autre du boîtier 30. En position montée du levier 8 à l'intérieur du boîtier 30, celui-ci est rappelé en permanence dans une position dans laquelle ces ergots associés 18a, 18b sont logés dans la partie inférieure des rainures arquées 33a, 33b correspondantes du boîtier 30, par l'intermédiaire d'un ressort 20, relié par l'une de ses extrémités en 43 au boîtier 30, et par l'autre de ses extrémités en 38, audit levier 8. On notera également sur cette figure, l'existence d'un autre orifice 53 prévu à la partie supérieure de l'un des flasques 30a, 30b et destiné à la fixation d'une biellette 10 de liaison des deux pieds 3, 4 d'un même côté du véhicule.

Sur la figure 3, on voit que l'une des ferrures 7 destinées à la réception des pieds de siège, est formée par une platine 71 comportant un logement sensiblement parallélépipèdique 72. Dans deux parois longitudinales opposées délimitant ce logement 72 ont été pratiquées deux paires d'encoches 17, 27 et 19, 29 situées l'une en regard de l'autre. Chacune de ces encoches 17, 27, 19, 29 est formée par une ouverture oblongue 17a ménagée dans la paroi verticale de la ferrure 7 et débouchant à la partie supérieure de cette ferrure 7 par une ouverture rétrécie 17b s'étendant latéralement sur la platine 71. On voit également sur cette figure, que des orifices 70 ont été ménagés dans la platine 71 précitée, et sont destinés à la fixation de la ferrure 7 sur le plancher du véhicule.

Le fonctionnement du dispositif de verrouillage de l'invention, permettant la mise en place et le verrouillage du siège sur le plancher du véhicule, va être décrit à travers ce qui suit à l'aide des figures 4 à 7.

Lors de l'opération de mise en place du siège 1 afin de réaliser sa fixation de manière amovible sur le plancher 9 du véhicule, les ergots 13 et 16 solidaires des pieds avant 3 et 6 sont préalablement introduits au fond de la partie oblongue 17a, 27a des encoches 17, 27 de la ferrure correspondante 7, après que les leviers de manoeuvre 8 aient été actionnés suivant le sens de la flèche F, de manière à réaliser de chaque côté du siège un rapprochement des deux ergots respectivement du pied 3 et du levier 8, ce rapprochement autorisant l'introduction des pieds 3, 6 dans la ferrure 7. Lorsque ces ergots 13, 16 sont logés au fond des encoches 17, 27, la pression exercée sur le levier 8 est relâchée de façon à ce que celui-ci soit rappelé grâce au ressort 20, par une rotation dans l'orifice 63, dans une position dans laquelle ses ergots 18 associés, se logent dans le fond opposé au précédent, de la partie oblongue 17a, 27a des encoches 17, 27, position illustrée sur la figure 4. Dans cette position, le retrait de la partie avant du siège 1 est rendu impossible grâce à la forme rétrécie de la partie débouchante de l'encoche 17. La même opération est répétée pour la fixation des pieds arrière 4, 5 du siège 1 sur le plancher du véhicule. On notera également que les leviers 8, 8c et 8a, 8b des moyens de verrouillage situés d'un même côté (avant ou arrière), étant reliés par une tige de liaison 36, 45, les deux leviers d'un même côté pourront être mis en oeuvre simultanément par l'actionnement de l'une seulement des deux palettes 28 desdits leviers.

On réalise le retrait du siège 1 en effectuant les mêmes opérations dans un ordre inverse.

Ainsi, les leviers de verrouillage 8 seront actionnés (figure 6) préalablement au soulèvement des sièges 1.

Lors du basculement du siège 1 vers l'avant du véhicule, tel qu'illustré sur la figure 7, les leviers des moyens de verrouillage équipant les pieds arrière 4, 5 seront préalablement actionnés afin de déverrouiller les parties arrière du siège 1, après quoi le siège 1 (assise et dossier), l'armature 2 et les pieds arrière 4, 5 seront entraînés en rotation autour de l'axe d'articulation 23 de l'armature 2 par rapport aux pieds avant 3, 6, jusqu'à ce que ladite armature 2 prenne une position verticale. Les pieds arrière 4, 5 seront alors rappelés le long de l'armature 2 pendant le pivotement, grâce aux tiges 10, 11 de liaison des pieds situés d'un même côté du véhicule.

On notera que les ferrures 7 illustrées sur les figures 4 et 7 comportant plusieurs paires d'encoches 17, 27 et 19, 29, disposées longitudinalement, les sièges 1 pourront être fixés en différentes positions suivant la direction longitudinale du véhicule.

On notera également que suivant cette réalisation particulière, le dispositif de verrouillage de l'invention pouvant aussi bien équiper les pieds avant que les pieds arrière du siège, la position de ce siège pourra être inversée par rapport à la direction longitudinale du véhicule.

On a donc réalisé suivant l'invention, un dispositif de verrouillage de siège de véhicule automobile, ainsi qu'un siège équipé de ce dispositif, de conception simple et de fonctionnement particulièrement fiable, permettant au siège de prendre plusieurs positions dans la direction de la longueur du véhicule tout en étant réversible et basculable.

Bien entendu l'invention n'est nullement limitée au mode de réalisation décrit et illustré qui n'a été donné qu'à titre d'exemple.

Au contraire, l'invention comprend tous les équivalents techniques des moyens décrits, ainsi que leurs combinaisons si celles-ci sont effectuées suivant son cadre tel que défini par les revendications suivantes.

## Revendications

1. Dispositif de verrouillage d'un siège sur un plancher en particulier pour véhicule automobile, du genre reliant de façon amovible la partie inférieure d'un siège comportant plusieurs pieds au plancher d'un véhicule, grâce à un moyen de verrouillage associé auxdits pieds et comprenant au moins un élément en saillie (13, 18) coopérant avec une encoche (17) ménagée dans une ferrure (7) solidaire du plancher du véhicule, ledit moyen de verrouillage étant rappelé en permanence, par l'intermédiaire d'un ressort (20), dans une position de verrouillage du pied correspondant (3) par rapport au plancher dans laquelle l'élément en saillie (13, 18) est prisonnier de l'encoche (17) précitée, et étant déverrouillable par l'entraînement en rotation d'un levier de manoeuvre (8) solidaire dudit élément en saillie (13, 18) autour d'un axe transversal du véhicule à l'encontre dudit ressort (20) jusqu'à une position de l'élément en saillie par rapport à l'encoche (17) permettant le retrait du siège, caractérisé en ce que le moyen de verrouillage précité comprend au moins deux éléments en saillie (13, 18) respectivement solidaires du pied précité (3) et du levier de manoeuvre précité (8), et destinés à coopérer avec l'encoche précitée (17) de telle façon que les deux éléments en saillie (13, 18) soient maintenus dans une position écartée au fond de l'encoche (17) par le ressort précité (20) en position de verrouillage du moyen de verrouillage empêchant le retrait du pied (3), et que l'entraînement en rotation du levier précité à l'encontre du ressort (20) provoque la libération de l'élément en saillie (18) associé au levier (8) du fond correspondant de l'encoche (17), cette libération entraînant le déverrouillage du siège (1) autorisant son retrait.

2. Dispositif de verrouillage selon la revendication 1, caractérisé en ce que les deux éléments en saillie précités (13, 18) respectivement associés au pied correspondant (3) et au levier (8), sont constitués chacun par deux ergots (13a, 13b et 18a, 18b) s'étendant latéralement de part et d'autre respectivement du pied (3) et du levier (8), lesdits ergots (13a, 13b, 18a, 18b) coopérant avec deux encoches (17, 27) en vis-à-vis prévues dans deux parois opposées d'une ferrure (7) solidaire du plancher du véhicule (9).

3. Dispositif selon la revendication 2, caractérisé en ce que le pied précité (3) comprend un boîtier (30) destiné à être logé en partie dans un évidement (72) prévu dans la ferrure précitée (7) entre les deux encoches en vis-à-vis précitées (17, 27), ledit boîtier (30) comprenant deux flasques parallèles (30a, 30b) entre lesquels le levier précité (8) est monté articulé.

4. Dispositif selon la revendication 3, caractérisé en ce que deux rainures arquées opposées (33a, 33b) sont ménagées respectivement dans les deux flasques précités (30a, 30b) et sont destinées à recevoir respectivement les deux ergots (18a, 18b) s'étendant latéralement de part et d'autre dudit levier (8) afin d'assurer leur passage lors de la rotation du levier (8).

5. Dispositif selon la revendication 3 ou 4, caractérisé en ce que le ressort de rappel (20) du levier précité (8) en position de verrouillage du siège (1) est relié par l'une de ses extrémités audit levier (8) et par son autre extrémité au boîtier précité (30).

6. Dispositif selon l'une quelconque des revendications 1 à 5, caractérisé en ce que chaque ferrure précitée (7) comporte plusieurs paires d'encoches (17, 27 et 19, 29) en vis-à-vis, lesdites paires s'étendant suivant la direction longitudinale du véhicule.

7. Dispositif selon l'une quelconque des revendications 1 à 6, caractérisé en ce que la partie supérieure de chaque ferrure (7) par laquelle débouchent les encoches (17, 27 et 19, 29) affleure le plancher (9).

8. Siège caractérisé en ce qu'il comporte au moins un pied équipé d'un dispositif de verrouillage selon l'une quelconque des revendications précédentes.

9. Siège caractérisé en ce qu'il comporte deux pieds avant équipés d'un dispositif de verrouillage selon l'une quelconque des revendication 1 à 7, les deux leviers (8, 8c) associés respectivement aux deux dispositifs de verrouillage précités étant solidaires d'une tige de liaison (36) traversant les deux boîtiers correspondants (30, 60) et formant axe d'articulation des deux leviers (8, 8c).

10. Siège caractérisé en ce qu'il comporte quatre pieds (3, 4, 5, 6) équipés d'un dispositif de verrouillage selon l'une quelconque des revendication 1 à 7, deux tiges de liaison (36, 45) reliant respectivement les deux leviers (8, 8c) des dispositifs de verrouillage situés à l'avant du véhicule et les deux leviers (8a, 8b) des dispositifs de verrouillage situés à l'arrière du véhicule.

11. Siège selon l'une quelconque des revendications 9 ou 10, caractérisé en ce qu'il comprend une armature (2) reliée de façon articulée aux deux pieds avant précités (3, 6).

12. Siège selon la revendication 11 en tant que dépendante de la revendication 10, caractérisé en ce que ladite armature (2) est reliée de façon articulée aux deux pieds arrière précités (4, 5).

13. Siège selon la revendication 12, caractérisé en ce que chaque pied avant (3, 6) est relié au pied arrière (4, 5) du même côté par une biellette de liaison (10, 11).

## Claims

1. Device for locking a seat onto the floor in particular for an automotive vehicle of the kind connecting in a removable manner the lower part of a seat comprising several feet to the floor of a vehicle owing to a locking means associated with the said feet and comprising at least one projecting element (13, 18) co-operating with a notch (17) formed in a fitting (7) made fast to the floor of the vehicle, the said locking means being permanently drawn back through the medium of a spring (20) into a position of locking of the corresponding foot (3) with respect to the floor, in which position the projecting element (13, 18) is caught within the aforesaid notch (17) and being unlockable by the rotation of a control lever (8) made fast to the said projecting element about a transverse axis of the vehicle against the said spring (20) to a position of the projecting element with respect to the notch (17) permitting the withdrawal of the seat, characterized in that the aforesaid locking means comprises at least two projecting elements (13, 18) made fast to the aforesaid foot (3) and to the aforesaid control lever (8), respectively, and intended to co-operate with the aforesaid notch (17) in such a manner that both projecting elements (13, 18) be kept in a position spaced from the bottom of the notch (17) by the aforesaid spring (20) in the locking position of the locking means preventing the withdrawal of the foot (3) and that the rotary drive of the aforesaid lever against the spring (20) causes the release of the projecting element (18) associated with the lever (8) from the corresponding bottom of the notch (17), this release resulting in the unlocking of the seat (1) allowing its withdrawal.

2. Locking device according to claim 1, characterized in that both aforesaid projecting elements (13, 18) associated with the corresponding foot (3) and with the lever (8), respectively, are constituted each one by two studs (13a, 13b and 18a, 18b) extending sidewise on either side of the foot (3) and of the lever (8), respectively, the said studs (13a, 13b, 18a, 18b) co-operating with two confronting notches (17, 27) provided in both opposite walls of a fitting (7) made fast to the vehicle floor (9).

3. Device according to claim 2, characterized in that the aforesaid foot (3) comprises a casing (30) intended to be accommodated in part within a recess (72) provided in the aforesaid fitting (7) between both aforesaid confronting notches (17, 27), the said casing (30) comprising two parallel cheeks (30a, 30b) between which the aforesaid lever (8) is pivotally mounted.

4. Device according to claim 3, characterized in that two arcuate opposite grooves (33a, 33b) are formed in both aforesaid cheeks (30a, 30b), respectively, and are intended to receive both studs (18a, 18b), respectively, extending sidewise on either side of the said lever (8) in order to ensure their passage upon the rotation of the lever (8).

5. Device according to claim 3 or 4, characterized in that the return spring (20) of the aforesaid lever (8) in the position of locking of the seat (1) is connected with one of its ends to the said lever (8) and with its other end to the aforesaid casing (30).

6. Device according to any one of claims 1 to 5, characterized in that each aforesaid fitting (7) comprises several pairs of a confronting notches (17, 27 and 19, 29), the said pairs extending in the longitudinal direction of the vehicle.

7. Device according to any one of claims 1 to 6, characterized in that the upper portion of each fitting (7) through which are opening the notches (17, 27 and 19, 29) is flush with the floor (9).

8. Seat characterized in that it comprises at least one foot fitted with a locking device according to any one of the foregoing claims.

9. Seat characterized in that it comprises two front feet fitted with a locking device according to any one of claims 1 to 7, both levers (8, 8c) associated with both aforesaid locking devices, respectively, being made fast to a connecting rod (36) extending through both corresponding casings (30, 60) and forming the pivot pin of both levers (8, 8c).

10. Seat characterized in that it comprises four feet (3, 4, 5, 6) fitted with a locking device according to any one of claims 1 to 7, both connecting rods (36, 45) connecting both levers (8, 8c) of the locking devices located in front of the vehicle and both levers (8a, 8b) of the locking devices located at the rear of the vehicle, respectively.

11. Seat according to any one of claims 9 or 10, characterized in that it comprises a frame (2) connected in a pivotally connected manner to both aforesaid front feet (3, 6).

12. Seat according to claim 11 as dependent from claim 10, characterized in that the said frame (2) is connected in a pivotally connecting manner to both aforesaid rear feet (4, 5).

13. Seat according to claim 12, characterized in that each front foot (3, 6) is connected to the rear foot (4, 5) on the same side by a connecting link (10, 11).

## Patentansprüche

1. Vorrichtung zur Verriegelung eines Sitzes an dem Fussboden insbesondere eines Kraftfahrzeuges derjenigen Gattung, bei welcher die Vorrichtung den unteren Teil eines mehrere Füsse aufweisenden Sitzes mit dem Fussboden eines Fahrzeuges in lösbarer Weise dank eines den besagten Füssen zugeordneten Verriegelungsmittels verbindet, welches wenigstens ein mit einer in einem mit dem Fussboden des Fahrzeuges fest verbundenen Beschlag (7) gebildeten Kerbe (17) zusammenwirkendes vorstehendes Element (13, 18) aufweist, wobei das besagte Verriegelungselement ständig über eine Feder (20) zur Rückstellung in einer Stellung der Verrriegung des entsprechenden Fusses (3) in bezug auf den Fussboden beaufschlagt wird, in welcher das vorstehende Element (13, 18) in der vorgenannten Kerbe (17) gefangen ist und es durch Drehantrieb eines mit dem besagten vorstehenden Element (13, 18) verbundenen Betätigungshebels (8) um eine Querachse des Fahrzeuges entgegen der Feder (20) bis zu einer die Abnahme des Sitzes gestattenden Stellung des vorstehenden Elementes in bezug auf die Kerbe (17) entriegelbar ist, dadurch gekennzeichnet, dass das vorgenannte Verriegelungsmittel wenigstens zwei jeweils mit dem vorgenannten Fuss (3) und mit dem vorgenannten Betätigungshebel (8) fest verbundene vorstehende Elemente (13, 18) aufweist, welche dazu bestimmt sind, mit der vorgenannten Kerbe (17) derart zusammenzuwirken, dass die beiden vorstehenden Elemente (13, 18) in einer im Abstand von dem Boden der Kerbe (17) durch die vorgenannte Feder (20) in der Verriegelungsstellung des den Rückzug des Fusses (3) verhindernden Verriegelungsmittels gehalten werden, und dass der Drehantrieb des vorgenannten Hebels entgegen der Feder (20) das Freisetzen des im Hebel (8) zugeordneten vorstehenden Elementes (18) und dem entsprechenden Boden der Kerbe (17) verursacht, wobei dieses Freisetzen die Entriegelung des Sitzes (1), welche seine Abnahme gestattet, zur Folge hat.

2. Verriegelungsvorrichtung nach Anspruch 1, dadurch gekennzeichnet, dass die beiden jeweils dem entsprechenden Fuss (3) und dem Hebel (8) zugeordneten vorgenannten vorstehenden Elementen (13, 18) jeweils durch zwei seitlich beiderseits jeweils des Fusses (3) und des Hebels (8) sich erstreckenden Zapfen (13a, 13b und 18a, 18b) gebildet werden, wobei die besagten Zapfen (13a, 13b, 18a, 18b) mit den zwei in zwei entgegengesetzten Wandungen eines mit dem Fahrzeugsfussboden (9) fest verbundenen Beschlages (7) vorgesehenen, einander gegenüberliegenden Kerben (17, 27) zusammenwirken.

3. Vorrichtung nach Anspruch 2, dadurch gekennzeichnet, dass der vorgenannte Fuss (3) ein Gehäuse (30) aufweist, das bestimmt ist, zum Teil in einer in dem vorgenannten Beschlag (7) zwischen den vorgenannten einander gegenüberliegenden Kerben (17, 27) vorgesehenen Aussparung (72) untergebracht zu werden, wobei das besagte Gehäuse (30) zwei parallele Wangen (30a, 30b) aufweist, zwischen welchen der vorgenannte Hebel (8) gelenkig angeordnet ist.

4. Vorrichtung nach Anspruch 3, dadurch gekennzeichnet, dass zwei entgegengesetzte bogenförmige Nuten (33a, 33b) jeweils in den beiden vorgenannten Wangen (30a, 30b) gebildet sind und dazu bestimmt sind, jeweils die beiden seitlich beiderseits des besagten Hebels (8) verlaufenden Zapfen (18a, 18b) aufzunehmen, um deren Durchlass während der Drehung des Hebels (8) zu gewährleisten.

5. Vorrichtung nach Anspruch 3 oder 4, dadurch gekennzeichnet, dass die Feder (20) zur Rückstellung des vorgenannten Hebels (8) in die Verriegelungsstellung des Sitzes (1) mit einem ihrer Enden mit dem besagten Hebel (8) und mit ihrem anderen Ende mit dem vorgenannten Gehäuse (30) verbunden ist.

6. Vorrichtung nach irgendeinem der Ansprüche 1 bis 5, dadurch gekennzeichnet, dass jeder vorgenannte Beschlag (7) mehrere Paare von einander gegenüberliegenden Kerben (17, 27 und 19, 29) aufweist, wobei die besagten Paare sich in der Längsrichtung des Fahrzeuges erstrecken.

7. Vorrichtung nach irgendeinem der Ansprüche 1 bis 6, dadurch gekennzeichnet, dass der obere Teil jedes Beschlages (7) durch welchen die Kerben (17, 27 und 19, 29) ausmünden, mit dem Fussboden (9) bündig ausgerichtet sind.

8. Sitz dadurch gekennzeichnet, dass er wenigstens einen mit einer Verriegelungsvorrchtung gemäss irgendeinem der vorangehenden Ansprüche ausgerüsteten Fuss aufweist.

9. Sitz dadurch gekennzeichnet, dass er zwei mit einer Verriegelungsvorrichtung gemäss irgendeinem der Ansprüche 1 bis 7 ausgerüstete Vorderfüsse aufweist, wobei die beiden jeweils den beiden vorgenannten Verriegelungsvorrichtungen zugeordneten Hebel (8, 8c) mit einer die beiden entsprechenden Gehäuse (30, 60) durchsetzenden und einen Gelenkzapfen der beiden Hebel (8, 8c) bildenden Verbindungsstange (36) fest verbunden sind.

10. Sitz dadurch gekennzeichnet, dass er vier mit einer Verriegelungsvorrichtung gemäss irgendeinem der Ansprüche 1 bis 7 ausgerüstete Füsse (3, 4, 5, 6) aufweist, wobei die beiden Verbindungsstangen (36, 45) jeweils die beiden Hebel (8, 8c) der vorne im Fahrzeug gelegenen Verriegelungsvorrichtungen und die beiden Hebel (8a, 8b) der hinten im Fahrzeug gelegenen Verriegelungsvorrichtungen verbinden.

11. Sitz gemäss irgendeinem der Ansprüche 9 oder 10, dadurch gekennzeichnet, dass er einen in gelenkiger Weise mit den zwei vorgenannten Vorderfüssen (3, 6) verbundenen Rahmen (2) aufweist.

12. Sitz gemäss Anspruch 11, als vom Anspruch 10 abhängend, dadurch gekennzeichnet, dass der besagte Rahmen (2) mit den beiden vorgenannten hinteren Füssen (4, 5) in gelenkiger Weise verbunden ist.

13. Sitz gemäss Anspruch 12, dadurch gekennzeichnet, dass jeder Vorderfuss (3, 6) mit dem Hinterfuss (4, 5) auf derselben Seite durch einen Verbindungslenker (10, 11) verbunden ist.
